# EUROPEAN PATENT APPLICATION

(11) **EP 3 725 724 A1**
(43) Date of publication of application: **21.10.2020**
(21) Application number: 19382285.5
(22) Date of filing: 15.04.2019
(51) Int. Cl.: B66B 7/02

(54) **METHOD AND APPARATUS FOR SENSING MOTION OF AN ELEVATOR CAR OR COUNTERWEIGHT**

(71) Applicant: Otis Elevator Company, Farmington, Connecticut 06032 (US)
(72) Inventor: MUÑOZ SOTOCA, Javier, Madrid 28919 (ES)
(74) Representative: Dehns

(57) **Abstract**

A guide rail (1, 41, 51, 61, 71, 81) for an elevator car (82) or counterweight, wherein the guide rail (1, 41, 51, 61, 71, 81) comprises a pattern (6, 46, 56, 66, 76) formed directly on the guide rail (1, 41, 51, 61, 71, 81) and extending along the length of the guide rail (1, 41, 51, 61, 71, 81), suitable for being detected by a sensor (84).

## Description

### Technical field

This disclosure relates to sensing of the motion of an elevator car within an elevator system, for example sensing the speed of an elevator car.

### Background

It is known in the art to detect the speed of an elevator car using a position detection system of the elevator to first determine the position of the elevator car at two distinct times, and then to calculate the speed of the elevator from these values. One system known in the art is a CEDES system, in which a strip of material is fixed down the length of an elevator hoistway and an optical sensor is used to detect said strip, using an optical sensor mounted on the elevator car, in order to detect the speed and acceleration of the elevator car.

The present disclosure seeks to provide a method and apparatus for sensing motion of an elevator car which overcomes various shortcomings of the methods known in the art.

### Summary

According to a first aspect of this disclosure there is provided a guide rail for an elevator car or counterweight, wherein the guide rail comprises a pattern formed directly on the guide rail and extending along the length of the guide rail, suitable for being detected by a sensor.

By forming a pattern on the guide rail it is thereby possible to detect and measure the motion of the elevator car (or counterweight) within the hoistway by using a suitable sensor to detect the pattern on the guide rail, without the need for additional parts to be present in the hoistway. It will be understood by the statement "along the length of the guide rail" that the pattern covers a substantial part of the length of the guide rail, but need not cover the entire length. For example, there may be a portion at either or both ends of the guide rail that will not be detectable by the sensor due to the sensor's position on the elevator car. No pattern needs to be formed in such regions of guide rail that cannot be sensed. Furthermore, it will be understood that an elevator guide rail generally has a very elongate shape, having a small cross section across two of its dimensions and with its other dimension having an extent many times greater along its "length" direction. It is therefore to be understood that the pattern is along an elongate surface (i.e. along the longest dimension) of the guide rail rather than on one of the short widths of the guide rail.

Optionally the guide rail comprises one or more patterns formed on the guide rail. Optionally the pattern is formed on a surface of the guide rail which, in use, is not engaged with a guiding element of the elevator car, such as a roller or slider. This provides the benefit that the pattern is prevented from interfering with the rollers or sliders on which the elevator car travels. Additionally, the pattern is protected from wear or damage that may result from contact with such guiding elements.

Optionally the pattern is on a recessed surface of the guide rail. The recessed surface may be recessed with respect to a guide surface that is intended for contact with guide members such as rollers or sliders. The recess ensures that the pattern is protected even in the event that the guide members move and/or overlap the end of the guide surface as the guide members will then still not contact the pattern.

The guide rail may be generally T-shaped, comprising a base portion designed to sit against and be fixed to a hoistway wall, and a projecting portion for providing one or more guide surfaces to guide the elevator car within the hoistway. The projecting portion may have a guide portion at its distal end. The guide portion may have lateral surfaces (substantially perpendicular to the hoistway wall and the base portion) that are designed to engage the guiding elements (rollers and/or sliders) of the elevator car. The projecting portion may comprise a thinner portion disposed between the distal guide portion and the base portion, the thinner portion having a thickness between its two opposed lateral surfaces that is smaller than the thickness of the two opposed lateral surfaces of the distal guide portion. In this way either or both of the lateral surfaces of the thinner portion may be recessed with respect to the adjacent lateral surface of the guide portion. The pattern is then preferably formed on one or both of these lateral surfaces of the thinner portion.

In some examples the pattern comprises a plurality of equally spaced marker regions. This makes the computation of the elevator speed particularly simple as the distance between each adjacent pair of marker regions is the same, such that a count of the number of detected marker regions in a particular time (or a measurement of the time between detecting two adjacent marker regions) can be used to calculate the speed of the elevator. Alternatively the pattern could comprise a plurality of marker regions which are not equally spaced, or which are randomly spaced. In the case of non-equal or random spacings, the spacings may be stored in memory as a reference to be used during position and/or speed sensing. Such spacings may be detected during a calibration run as part of the installation procedure.

Alternatively the pattern could be a single continuous pattern without distinct regions, for example a length of bar code or (two dimensional) matrix code formed on the guide rail surface.

The spacing between adjacent marker regions is preferably sufficiently small to allow reasonably accurate detection of the speed of an elevator car. In a set of preferred examples the separation between adjacent marker regions is preferably no more than 10mm, more preferably no more than 5mm, or no more than 3mm. The width (measured along the direction of movement of the elevator car, i.e. along the longest dimension of the guide rail) of each marker region is preferably no more than 10mm, more preferably no more than 5mm, or no more than 3mm. In some examples, the width and/or the spacing may be at least 2mm, preferably at least 3mm as this corresponds to a typical diameter for certain sensors. In particularly, a typical inductive sensor diameter may be at least 3mm. These widths and spacings may also vary depending on the size of the building. For example, the examples above may be suitable for a small building, e.g. one of around 5 storeys, while for larger buildings (e.g. a 300m tall building) with faster elevators, the widths and spacings may be increased, e.g. up to 20mm, up to 30mm or up to 50mm. The depth of the marker regions may be at least 0.5 mm, preferably at least 1 mm or at least 2 mm. A greater depth facilitates reliable detection by the sensor. The depth of the marker regions is preferably no more than 3 mm. As any reduction in thickness of the guide rail may result in a small reduction in the overall strength and stability of the guide rail, the depth of the marker regions is preferably limited.

In some examples each marker region comprises a depression formed in the guide rail. The depressions may have a depth of less than half the thickness of the section of guide rail to which they are applied, preferably less than a quarter of that thickness. Each marker region could comprise a set of multiple depressions. The depressions could optionally be blind holes (i.e. not extending through the whole thickness of the guide rail) or they may in some examples be through holes (e.g. fully drilled holes). Through holes provide the benefit of forming a pattern simultaneously on two opposed surfaces of the guide rail. Such arrangements may be useful for redundancy, i.e. two sensors could be provided, one to sense each side of the guide rail, thus providing a fallback measurement in case one sensor fails. The depressions could be formed by various machining techniques, including etching (chemical or laser etching), rolling or stamping, grinding or blasting.

Alternatively each marker region could comprise an area of the guide rail which has a different surface finish (e.g. surface roughness) and/or different reflectivity compared to the surrounding guide rail surface. For example the marker regions may be formed by grinding or polishing the surface to have a different roughness or reflectivity from the rest of the guide rail.

Alternatively, each marker region could comprise a section of guide rail to which colour has been applied. In some examples all marker regions may be the same colour. However, in other examples different marker regions could be coloured with different colours. The use of different colours may be used to provide some degree of positional information, e.g. by providing a different coloured marker region at key locations within the hoistway, e.g. at a floor stop. More than two colours may be used to define multiple different locations or areas within the hoistway. It will be appreciated that different colours may be detected by using different sensors, e.g. using different wavelength light sources or filters. Optionally, the colours of the adjacent regions could form a non-repeating pattern along the whole length of the hoistway such that detection of a certain length of that pattern will form a unique sub-pattern capable of defining the absolute position within the hoistway. With such an arrangement, the pattern on the guiderail can be used not only to calculate speed, but also to calculate absolute position without having to perform a full end-to-end calibration run as is often required with existing positioning systems. This allows faster recovery of position information after a system error.

In some examples the pattern may comprise a relief pattern on the guide rail, i.e. the pattern may be formed by projections that project outwardly from the rest of the surface instead of depressions that sink inwardly from the rest of the surface. It will be appreciated that a relief pattern may be formed either by a material removal process such as etching the rest of the surface while leaving (e.g. by masking) areas that are to remain in relief. Alternatively the relief pattern may be formed by an additive process by which material is deposited on the surface of the guide rail. As discussed above, the pattern may be a repeating pattern or a non-repeating pattern.

As the pattern is formed directly on the guide rail, the guide rail surface itself preferably forms at least part of the pattern. For example the marker regions or the spaces between the marker regions may be formed by the guide rail. Thus, even in examples where the pattern is partially formed by addition of a patterning element to the guide rail surface, the pattern as a whole is still at least partly comprised by the guide rail itself. In many examples, such as where the pattern is formed by machining, grinding, etching, stamping, etc., the whole pattern is formed in and by the guide rail, i.e. with no additional material component added to the guide rail.

The guide rail disclosed herein is suitable for incorporation into an elevator system, and therefore according to a second aspect of this disclosure there is provided an elevator system, comprising: an elevator car or counterweight, a sensor fixed to the elevator car or counterweight; and a guide rail according to the first aspect, wherein the sensor is configured to detect the pattern. It will be appreciated that any or all of the optional or preferred features discussed above in relation to the guide rail of the first aspect can likewise optionally be present in the guide rail of the elevator system of the second aspect.

The sensor may be configured to determine the speed of the elevator car or counterweight relative to the guide rail using the sensed pattern. Preferably the pattern comprises a plurality of equally spaced marker regions and the sensor is configured to determine the speed of the elevator car by counting a number of marker regions which the sensor detects in a particular period of time. Alternatively, the sensor may be configured to determine the speed of the elevator car by measuring the time period that elapses during the detection of a number of marker regions.

While the sensor could be a contact-based sensor arranged to detect a property of the surface of the guide rail, e.g. its height below the sensor (for recessed or relief patterns) or its frictional properties (e.g. for surface roughness-based patterns), in preferred examples the sensor is a non-contact sensor so as to reduce the risk of wear of either the pattern or the sensor. The type of sensor may be selected based on the type of pattern. For example optical sensors (such as diffuse-reflective sensors) or infrared sensors may be used to detect the surface finish or reflectivity of the patterned surface. However optical sensors may suffer from the presence of contaminants that affect the reflection or absorption of the electromagnetic radiation. This can be a problem for example where dirt (such as dust and/or oils) may be deposited on the surface over time, or where atmospheric contaminants (such as dust from building works or smoke from a fire) may impede the sensor's function. Therefore in some preferred examples the sensor is an inductive sensor. An inductive sensor can detect the magnetic properties of a material and so is particularly suitable in elevators in which guide rails are typically formed from steel. Inductive sensors may be used with patterns that use a depth change such as depression patterns or relief patterns as the changing distance between the inductive sensor and the ferromagnetic surface will cause a change in the detectable field strength at the sensor. It will be appreciated that the inductive sensor may be arranged to output a binary signal based on detection or nondetection of a sufficiently proximate surface (i.e. essentially detecting only two states: near or far) and is calibrated such that the changes in the pattern will change the detected state, or the inductive sensor may be arranged to output a continuous measurement of field strength which can be processed by a processor to detect the changing field strength and thereby detect the changing pattern as the sensor passes over it. In such cases the processor may for example use various processing techniques to search for maxima and/or minima or to perform edge detection on the signal so as to detect aspects of the pattern. In other examples the sensor may be an ultrasound detector. An ultrasound detector is also more robust in the presence of contaminants (either on the rail or in the atmosphere) and can be arranged to detect the distance from the sensor to the surface of the guide rail either using signal strength techniques or using time of flight to detect the time for a pulse to travel to and from the guide rail surface. In other examples the sensor may be a beam sensor. A beam sensor could in particular be useful in the case where the pattern is formed by marker regions comprising holes through the full depth of the guide rail. In this case the beam sensor can detect that a hole, or marker region, is present, if the beam is uninterrupted, and similarly detect a portion of guide rail because it interrupts the beam.

In many examples it will be sufficient to form a pattern on one surface of the guide rail and to arrange a single sensor facing that pattern for detection thereof. In cases where redundancy is required a second sensor may be arranged and directed at the same pattern. The second sensor could be provided adjacent to the first sensor and directed at the same region of the pattern, or the second sensor could be spaced apart from the first sensor (in the movement direction along the hoistway, i.e. along the largest dimension of the guide rail) and directed at a different region of the pattern. This latter arrangement is advantageous in that it may be better able to compensate where a portion of the pattern has been damaged or obscured.

In other examples two patterns may be formed, each with its own sensor (or each with multiple sensors). The two patterns provide additional redundancy. They may be formed adjacent to one another on the same surface of the guide rail, but in some preferred arrangements are provided on opposite sides of the guide rail (or on one side and the end of the guide rail) as this provides a greater degree of risk-separation, i.e. it is less likely that the same event will damage both sensors or both patterns. Where patterns are formed in more than one place on the guide rail (e.g. on more than one of the sides and end), there may of course be two or more patterns provided adjacent to one another on at least one of those places. For example there may be two adjacent patterns formed on each of the opposite sides of the guide rail (for four patterns in total).

In addition (or as an alternative) to sensing the speed of the elevator, the sensor may be configured to determine the position of the elevator car relative to the guide rail using the sensed pattern. Such position sensing techniques have been discussed above and may (depending on the particular pattern used) be capable of sensing relative positional changes relative to a particular starting point, or may be able to determine absolute position within the hoistway, i.e. absolute position with respect to the pattern / guide rail as a whole. Optionally, in the aspect described above in which two patterns are formed, each with its own sensor, the first one of the patterns could be used to sense the speed of the elevator car and the second one of the patterns could be used to sense the position of the elevator car.

According to a third aspect of this disclosure there is provided a method of manufacture of a guide rail, comprising: applying a pattern along the length of a surface of the guide rail.

In some examples the pattern may be applied to the guide rail by stamping or indenting the surface of the guide rail using a tool with a corresponding relief pattern. The pattern can include any features discussed above in relation to depression or relief patterns. In some particularly preferred examples the pattern is applied to the guide rail by one or more rollers, the roller(s) having projections (i.e. teeth) suitably shaped and spaced so as to form the required pattern. Where the pattern is to be applied to both sides of a guide rail, this can be achieved simultaneously by providing two such rollers, one on either side of the guide rail so that both patterns are imprinted at the same time. Where only one pattern (on one side of the guide rail) is required, a second roller may still be used to provide a counterbalancing force, but may have a smooth surface rather than having projections.

It will be appreciated that while the above discussions have been provided predominantly in relation to an elevator car arranged to move along car guide rails, the disclosure applies equally to a counterweight arranged to move along counterweight guiderails.

According to a fourth aspect of this disclosure there is provided a method of sensing the speed of movement of an elevator car or counterweight relative to a guide rail, comprising: detecting, using a sensor, a pattern extending along the length of the guide rail; and calculating, using the sensed pattern, the speed of the elevator car or counterweight.

As discussed above, the pattern may comprise a plurality of equally spaced marker regions and the speed of the elevator car may be calculated by measuring a number of marker regions which the sensor passes in a measured period of time.

Further as discussed above, the sensor is preferably a non-contact sensor e.g. an inductive sensor or an ultrasound detector, or an infrared detector, or an optical detector such as a diffuse-reflective detector or a beam sensor.

Optionally the method may further comprise storing, in a memory, the sensed pattern. Preferably the memory may be the memory of a computer system.

Features of any aspect or example described herein may, wherever appropriate, be applied to any other aspect or example described herein. Where reference is made to different examples or sets of examples, it should be understood that these are not necessarily distinct but may overlap.

In particular, it should be appreciated that the different types of pattern may be combined and may be used simultaneously. For example a pattern that includes both depressions and relief elements is feasible. Equally, such patterns may additionally include areas (e.g. depressions or relief elements or other areas) of different colour and/or different surface texture / reflectivity. Suitable sensors may be combined as required according to the selected pattern.

### Detailed description

Certain preferred examples of this disclosure will now be described, by way of example only, with reference to the accompanying drawings, in which:
Figure 1 a shows a profile of a guide rail as is known in the art.
Figure 1b shows a profile of a guide rail according to the present disclosure.
Figure 2a shows a side view of a first example of a guide rail according to the present disclosure.
Figure 2b shows a three-dimensional representation of the guide rail of Figure 2a.
Figure 3 shows schematically a method of manufacture of a guide rail according to the present disclosure.
Figure 4 shows a second example of a guide rail according to the present disclosure.
Figure 5 shows a third example of a guide rail according to the present disclosure.
Figure 6 shows a fourth example of a guide rail according to the present disclosure.
Figure 7 shows a fifth example of a guide rail according to the present disclosure.
Figure 8 schematically shows an elevator system according to the present disclosure.

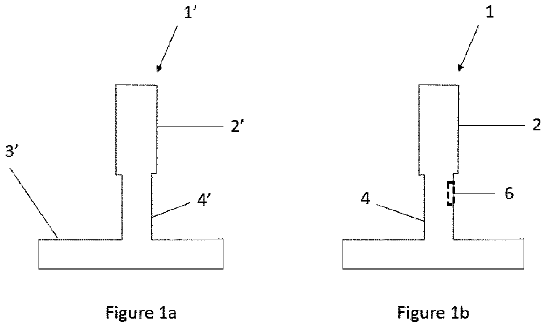

Figure 1a shows the profile of a guide rail 1', as is known in the art. It can be seen from this Figure that the guide rail 1' comprises a base portion 3' that may be fixed to the hoistway wall, and extending therefrom is a rail portion comprising a first portion 2' and a second portion 4'. In use there is typically a guide rail fixed along the length of two opposing sides of an elevator hoistway. An elevator car has guiding elements, e.g. rollers or sliders on two of its opposing sides, and these roll or slide along the first portion 2' of the guide rail 1', allowing the elevator car to move in the predefined direction allowed by the guide rail 1'. As shown in Figure 1a, the guide rail 1' further includes a second portion 4', which is not engaged with, or in contact with, the roller or slider of the elevator car. In this particular example the second portion 4' of the guide rail is thinner than the first portion 2' such that its surfaces are recessed with respect to the surfaces of the first portion 2'.

Figure 1b shows the profile of certain examples of a guide rail 1 as claimed. Similarly to the guide rail of Figure 1a, the guide rail 1 of the example of Figure 1b comprises a first portion 2, which, in use, is engaged with the rollers or sliders of an elevator car and a second portion 4 which is not engaged with, or in contact with, the rollers or sliders of the elevator car. The second portion 4 of the guide rail 1 is recessed as discussed above in relation to Fig. 1a. In addition to these features, the guide rail 1 has a pattern region 6, which is described in more detail with reference to the later Figures. In the pattern region 6, a pattern is formed directly on the surface of the second portion 4 of the guide rail 1.

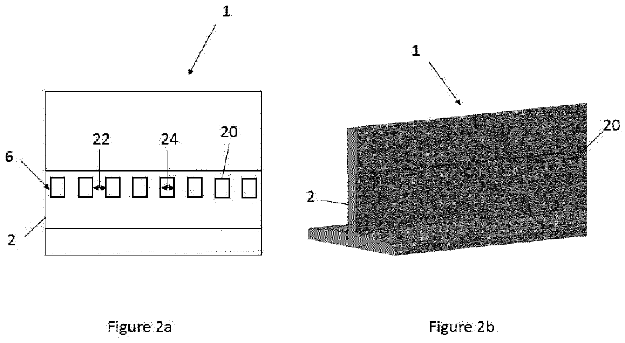

Figure 2a shows a first example of the present disclosure, and Figure 2b shows a three-dimensional representation of this same example. Both Figures 2a and 2b show a small section of a guide rail 1. In this particular example, the thinner (recessed) portion 4 of the guide rail 1 includes a pattern region 6, which is made up of a number of marker regions 20, which, in this example, are recessed depressions in the guide rail 1. In this example these marker regions are square or rectangular depressions or pockets 20. It will be appreciated that other shapes are also possible such as circles, ellipses, triangles, etc.

Adjacent pockets 20 are separated by a separation distance 22. In this example the separation distances 22 between adjacent pockets 20 are all equal, so that adjacent pockets 20 are equally spaced along substantially the length of the guide rail 1. In some examples this separation distance 22 can be no more than 10mm, more preferably no more than 5mm, or no more than 3mm. Each pocket 20 has a certain width 24. In this example each pocket 20 has an identical width 24, (and an identical height and depth) and therefore all of the pockets are identical. In some examples the width of the pocket 20 can be no more than 10mm, more preferably no more than 5mm, or no more than 3mm. The depth of the pockets (depressions) 20 may be at least 0.5 mm, preferably at least 1 mm or at least 2 mm. The depth of the pockets (depressions) 20 is preferably no more than 3 mm.

In use a sensor attached to an elevator car can detect these pockets 20 and measure the number of pockets 20 which the sensor passes in a measured period of time. The method of detection will vary depending on the sensor used, but may for example be based on a detected magnetic field strength, a strength of reflected electromagnetic radiation, the presence/absence of electromagnetic radiation and/or the strength or time of flight of a reflected ultrasound pulse. Since, in this example, the adjacent pockets 20 are spaced equally apart, these measurements can be straightforwardly used to calculate the speed of the elevator car relative to the guide rail 1. The pocket width 24 is first added to the separation distance 22, and this total distance is then multiplied by the number of pockets passed, as measured by the sensor. Alternatively, this total distance may be determined through edge detection (of rising edges or falling edges) in a sensor signal. This value is then divided by the time period during which the sensor was measuring, thereby giving the speed of the elevator car relative to the guide rail 1. In some elevator systems it may be possible for this calculation to be carried out by the sensor, while in other systems the information detected by the sensor may be sent to a control system which will then process the information from the sensor to determine the speed of the elevator car. The pockets 20 could also be used to determine the position of the elevator car relative to the guide rail 1. For example, a sensor could detect a particular pocket 20 as being a "start pocket" and could then keep a simple count of the number of pockets which the sensor detects, for a particular period of travel in a single direction, and could then translate this "pocket count" into a distance value representing the position of the elevator within the hoistway relative to the "start" pocket. In a typical example, the "start" pocket may be at the top or bottom of the pattern, representing the extremes of the elevator's possible movement, but in principle any reference pocket may be used. Alternatively the separation 22 between the pockets 20 and/or the width 24 of the pockets could be varied along the length of the pattern sufficiently that these differences are detectable by the sensor. These variations could have a repeating pattern. However, the pocket dimensions could alternatively be varied in a non-repeating way so that from a particular sensor reading (or set of sensor readings) the sensor, or the control, could determine from a reference copy of the pattern stored in a memory the absolute position of the elevator car. Such position measurements may of course also be used to determine the speed of the elevator car.

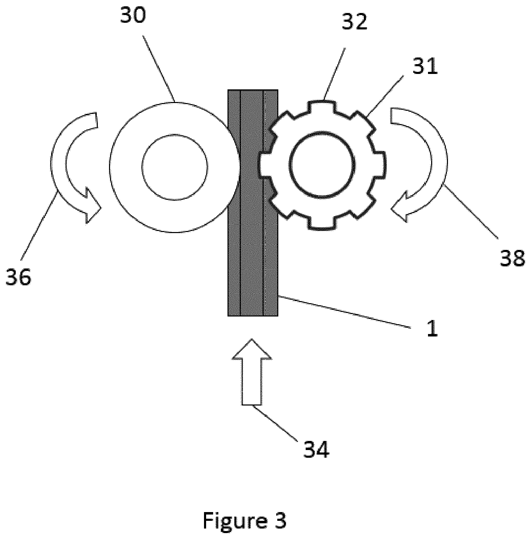

Figure 3 schematically shows a possible method of manufacture of the guide rail 1 shown in Figures 2a and 2b. In this method the guide rail 1 is rolled between a first roller wheel 30 and a second roller wheel 32. The arrow 34 shows the direction of the motion of the guide rail 1 as the guide rail is being rolled between the wheels 30 and 32. The first roller wheel 30 is moving, from the perspective shown in Figure 3, in an anticlockwise direction, as shown by the directional arrow 36. The second roller wheel 32 is moving in the clockwise direction, as shown by the arrow 38. The second roller wheel 32 comprises a number of raised portions 31. As the guide rail 1 is rolled between the two wheels 30, 32, the second roller wheel 32 creates depressions in the surface of the guide rail 1, i.e. it forms the pockets 20. Therefore, the size of each of these raised portions 31 determines the size of each of the pockets 20 of the guide rail 1. The separation distance between the two roller wheels 30, 32 determines the depth of each of the pockets 20. The depth of the pockets 20 in some examples will be less than half of the overall thickness of the guide rail section 4, and could be less than a quarter of the overall thickness of the guide rail section 4.

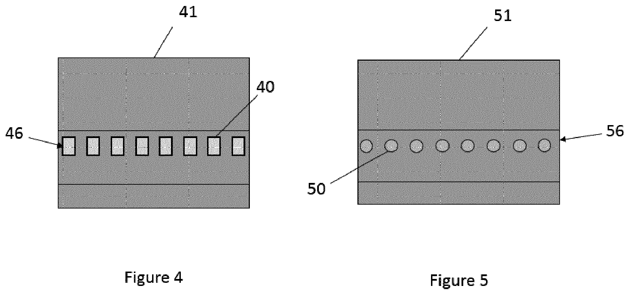

Figure 4 shows a portion of an alternative guide rail 41 which is another example of the present disclosure. The pattern region 46 of the guide rail 41 of Figure 4 comprises a number of marker regions 40 which are areas of the surface of the guide rail 41 which have been ground or given a mirror finish so that they have a different surface roughness from the guide rail material. These marker regions 40 could be easily detected using a diffuse-reflective sensor, although other sensors could also be suitable.

Figure 5 shows a portion of another alternative guide rail 51 which is another example of the present disclosure. The guide rail 51 of Figure 5 has a pattern region 56 comprising a plurality of drilled holes 50 spaced along substantially the whole length of the guide rail. In some examples the holes could be drilled all the way through the guide rail ("through holes") with the advantage that this forms the same pattern simultaneously on both sides of the guide rail 1, or they could preferably be drilled (or otherwise machined) only part of the way through the thickness of the guide rail section. These kinds of holes are known as 'blind holes'. Blind holes have the advantage of removing less material from the guide rail 1 and therefore having less of an impact on the strength of the guide rail 1. With through holes, a beam sensor may be used to detect the holes by placing a beam transmitter on one side of the rail and a beam receiver on the other side of the rail such that the transmitted beam is broken except when a hole passes between transmitter and receiver.

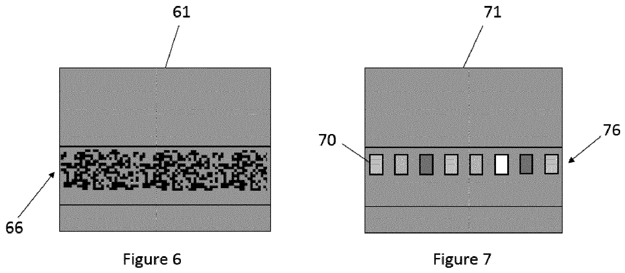

Figure 6 shows a portion of another alternative guide rail 61 which is another example of the present disclosure. The guide rail 61 has a pattern region 66. The pattern region 66 comprises an optical, machine-readable representation of data, for example a barcode or preferably a two dimensional matrix code. The code 66 could be printed or laser etched directly onto the guide rail 61.

The code 66 can be detected by a sensor, and, in use, the sensor could determine the position of an elevator car relative to the guide rail 61 by referencing the part of the code 66 detected by the sensor at a given time to a copy of the code stored in a memory of the elevator system. This position information could then be used by the elevator system to determine the speed of the elevator car relative to the guide rail 61. Alternatively, the code 66 could contain some repeating pattern, present at certain pre-defined intervals, which could then be detected by the sensor and used to calculate the speed and position of the elevator car relative to the guide rail similarly to the methods described above. This code 66 could be easily detected using an optical sensor, although other sensors would be suitable.

Figure 7 shows a portion of another alternative guide rail 71. The pattern portion 76 of this guide rail comprises a plurality of coloured regions 70. Adjacent regions 70 could be coloured with the same colour (with a different colour in between such as the natural colour of the guide rail) or could be coloured with different colours. Optionally these colours could form a non-repeating pattern along the length of the guide rail. This non-repeating pattern could be used to detect the position of an elevator car relative to the guide rail 71 as discussed above. The coloured regions 70 could be used in combination with the other marker regions disclosed herein, or colour could be applied within any of the other regions disclosed herein. These coloured regions 70 could be most easily detected using an optical sensor, although other sensors would be suitable.

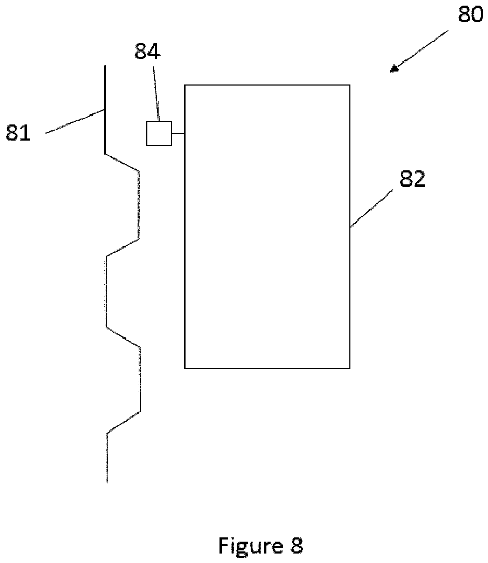

Figure 8 shows a guide rail 81 positioned in use within an elevator system 80. The elevator system includes a car 82, within which there is located a sensor 84. The guide rail 81 could be any of the examples of this disclosure which are disclosed herein. As the elevator car 82 moves up and down the hoistway, along the guide rail 81, the sensor 84 detects the pattern which is present on a surface of the guide rail 81 and can thereby determine certain measurements of the motion of the elevator, for example the speed or position of the elevator car 82 relative to the guide rail 81. It will be appreciated that Figure 8 is somewhat illustrative and the dimensions of the pattern have been greatly exaggerated in relation to the car 82 for the sake of illustration.

The sensor could be an optical sensor, which would be particularly well-suited to detecting coloured marker regions and bar codes or matrix codes. The sensor could be a diffuse-reflective sensor, which would be particularly suitable for detecting areas of the guide rail having different surface roughness or a mirror finish. The sensor could be an infrared sensor. The sensor could be a beam sensor. The sensor 84 could be an ultrasound sensor or the sensor 84 could be an inductive sensor. Inductive and ultrasound sensors provide the added benefit compared to an optical sensor that they are not affected by light conditions within the hoistway.

It will be appreciated by those skilled in the art that the invention has been illustrated by describing one or more specific embodiments thereof, but is not limited to these embodiments; many variations and modifications are possible, within the scope of the accompanying claims.

## Claims

1. A guide rail for an elevator car or counterweight, wherein the guide rail comprises a pattern formed directly on the guide rail and extending along the length of the guide rail, suitable for being detected by a sensor.

2. The guide rail of claim 1 wherein the pattern is on a surface of the guide rail which, in use, is not engaged with a guiding element of the elevator car, such as a roller or slider.

3. The guide rail of any preceding claim wherein the pattern is on a recessed surface of the guide rail.

4. The guide rail of any preceding claim wherein the pattern comprises a plurality of equally spaced marker regions.

5. The guide rail of claim 4 wherein the spacing between adjacent marker regions is no more than 10mm.

6. The guide rail of claim 4 or 5 wherein each marker region comprises a depression formed in the guide rail.

7. The guide rail of any preceding claim wherein the pattern comprises a relief pattern on the guide rail.

8. The guide rail of any preceding claim wherein the pattern is a repeating pattern.

9. An elevator system, comprising:
an elevator car or counterweight;
a sensor fixed to the elevator car or counterweight; and
a guide rail as claimed in any preceding claim,
wherein the sensor is configured to detect the pattern.

10. The elevator system of claim 9 wherein the sensor is configured to determine the speed and/or the position of the elevator car or counterweight relative to the guide rail, using the sensed pattern.

11. The elevator system of claim 10 wherein the pattern comprises a plurality of equally spaced marker regions and wherein the sensor is configured to determine the speed of the elevator car by counting a number of marker regions which the sensor detects in a particular period of time, or by measuring the time period that elapses during the detection of a number of marker regions.

12. The elevator system of claims 9 -11, wherein the sensor is a non-contact sensor, e.g. an inductive sensor, or an ultrasound detector, or an infrared detector, or an optical detector, or a diffuse-reflective detector.

13. A method of manufacture of a guide rail, comprising:
applying a pattern along the length of a surface of the guide rail.

14. The method of claim 13, wherein the pattern is applied to the guide rail by stamping or indenting the surface of the guide rail using a tool with a corresponding relief pattern.

15. A method of sensing the speed of movement of an elevator car or counterweight relative to a guide rail, comprising:
detecting, using a sensor, a pattern extending along the length of the guide rail; and
calculating, using the sensed pattern, the speed of the elevator car or counterweight.
